# FASCICULE DE BREVET EUROPEEN

(11) **EP 1 960 218 B1**
(45) Date de publication et mention de la délivrance du brevet: **03.07.2013**
(21) Numéro de dépôt: 06842146.0
(22) Date de dépôt: 12.12.2006
(51) Int. Cl.: B60C 23/04

(54) **PROCEDE ET SYSTEME DE TRANSMISSION D'UN IDENTIFIANT D'UNE VALVE D'UNE ROUE D'UN VEHICULE A UN RECEPTEUR DE BORD DE CE VEHICULE**
VERFAHREN UND SYSTEM ZUR ÜBERTRAGUNG EINER RADVENTILKENNUNG VOM RADVENTIL ZU EINEM FAHRZEUGSEITIGEN EMPFÄNGER
METHOD AND SYSTEM FOR TRANSMITTING AN IDENTIFIER OF A VALVE OF A WHEEL OF A VEHICLE TO A RECEIVER ON BOARD THIS VEHICLE

(30) Priorité: 15.12.2005 FR 0512738
(43) Date de publication de la demande: 27.08.2008
(73) Titulaire: RENAULT S.A.S., 92100 Boulogne Billancourt (FR); Continental Automotive France, 31036 Toulouse (FR)
(72) Inventeur: ARTUR, Philippe, F-78114 Magny Les Hameaux (FR); CALDICHOURY, Anne, F-92210 Saint-Cloud (FR); COSTES, Olivier, F-31270 Cugnaux (FR); DUBOT, Eric, F-78000 Versailles (FR); GAZALET, Olivier, F-78280 Guyancourt (FR)
(74) Mandataire: Casalonga, Axel
(86) Numéro de dépôt international: PCT/FR2006/051336
(87) Numéro de publication internationale: WO 2007/068854

(56) Documents cités:
- FR-A- 2 819 613
- US-A1- 2004 056 764
- US-A1- 2004 061 602

## Description

La présente invention concerne un procédé et un système de transmission d'au moins une donnée d'identification d'une valve d'au moins une roue à un récepteur de bord d'un véhicule.

La présente invention se rapporte plus précisément au domaine du contrôle des pressions des pneumatiques des roues d'un véhicule.

Actuellement, les contrôles des pressions des roues d'un véhicule se font grâce à des systèmes mettant en jeu au moins un émetteur qui est placé au niveau de la valve portée par une roue, et qui permet de renseigner l'utilisateur au sujet de la pression des pneumatiques de la roue, par l'intermédiaire d'un récepteur de bord et/ou d'un calculateur. La communication entre la valve émettrice et le récepteur de bord est réalisée au moyen d'un identifiant de la valve. De plus, pour que le récepteur de bord puisse déterminer la roue portant la valve émettrice, il est nécessaire d'associer une valve à une roue. Cette association doit être réitérée à chaque fois qu'il y a un changement de roue ou de valve au niveau du véhicule.

Le document FR 2 819 613 divulgue un procédé de mise en correspondance d'un identifiant d'une valve d'une roue d'un véhicule automobile avec un identifiant de cette roue.

Un tel procédé nécessite d'associer un identifiant à chaque roue et d'utiliser des moyens de correspondance, par exemple des tableaux, entre un identifiant de roue et un identifiant de valve.

Le nombre total d'identifiants à manipuler selon le procédé divulgué dans le document précité est donc deux fois plus important que le nombre de valves, ce qui rajoute de la complexité à la manipulation des identifiants. De plus cela nécessite une plus grande mémoire au niveau du récepteur de bord.

Enfin un tel procédé nécessite un apprentissage par le récepteur de bord d'un nombre déterminé d'identifiants, ce qui demande un laps de temps important.

La présente invention a pour but de fournir un procédé dans lequel il n'y a pas de nécessité d'apprentissage d'un nombre déterminé d'identifiants.

Un autre but de la présente invention est de proposer un procédé permettant une mise en relation plus rapide d'une valve avec la roue portant cette valve.

L'invention a donc pour objet un procédé de transmission d'au moins une donnée d'identification d'une valve d'au moins une roue à un récepteur de bord d'un véhicule, ledit procédé comprenant :
d'une part, au moins une itération des étapes suivantes :
   - excitation de la valve,
   - émission, par la valve, d'une trame de données comprenant au moins un code identifiant de la valve, et
   - réception de la trame par le récepteur de bord, la réception comprenant un rafraîchissement, par les données de la trame reçue, d'une plage de mémoire contenue dans le récepteur ;
d'autre part :
   - une opération de lecture, par un outil de diagnostic, des dernières données contenues dans ladite plage de mémoire, et
   - une opération d'écriture dans une zone mémoire dédiée au stockage de codes identifiants, par un outil de diagnostic, d'au moins une partie desdites données lues comportant un code identifiant,
l'opération d'écriture étant effectuée après validation d'un opérateur.

Le procédé selon l'invention permet avantageusement de transmettre l'identifiant d'une valve d'une roue d'un véhicule à un récepteur de bord de ce véhicule sans utiliser un identifiant de la roue portant la valve.

De plus, dans une version avantageuse de l'invention, la transmission de l'identifiant de la valve est effectuée sans utiliser un moyen de mise en correspondance, tel que par exemple un tableau ou une matrice, qui devrait être mémorisé par un calculateur de bord ou un récepteur de bord.

D'une manière avantageuse, le procédé selon l'invention ne nécessite pas l'apprentissage d'un nombre déterminé d'identifiants, l'invention permettant de mémoriser un code identifiant dans une zone mémoire dédiée.

Avantageusement, le contenu de la plage de mémoire est accessible par l'opérateur sur requête à l'aide d'un service de lecture de données utilisant un identifiant local associé à la plage de mémoire. Ceci facilite la lecture des données de la plage de mémoire du récepteur de bord. Le service de lecture de données avec un identifiant local (local ID), peut être un service de type « diag on CAN ».

De plus, selon une particularité avantageuse, la trame de données émise par la valve comprend en outre des données concernant un type d'événement ayant provoqué l'excitation de ladite valve.

Avantageusement, l'excitation de la valve peut être provoquée par un outil émetteur. Cet outil émetteur peut être directement actionné par un opérateur de façon manuelle ou à distance, ou par un autre dispositif capable de déclencher l'outil émetteur, tel que par exemple un calculateur de bord ou un outil de diagnostic.

Dans une particularité avantageuse, l'excitation de la valve peut être provoquée par un écart de pression au niveau d'un pneumatique d'une roue portant la valve.

Cet écart de pression peut, par exemple, être une diminution de la pression des pneumatique par une fuite d'air ou par une crevaison ou bien par un dégonflement effectué par une personne quelconque ou une augmentation de pression des pneumatiques.

Dans une version avantageuse, le procédé selon l'invention peut comprendre un traitement des données lues dans la plage de mémoire du récepteur de bord par un outil de diagnostic. Ce traitement peut comprendre une vérification de la cohérence de ces données. Le traitement peut aussi comprendre une extraction d'un ou plusieurs codes d'identification de la valve ayant émise la dernière trame enregistrée dans la plage de mémoire par le récepteur de bord. L'outil de diagnostic peut aussi traiter les données pour en extraire des informations relatives au type d'événement ayant provoqué l'émission de la trame ou toute autre donnée comprise dans la plage de mémoire. La plage de mémoire peut comprendre, par exemple des données concernant la date d'enregistrement de la trame, etc.

Dans une version avantageuse, le traitement des données lues comprend une vérification de la cohérence et/ou de la pertinence des données conformément à un format prédéfini.

Avantageusement la trame de données émise par la valve peut être une trame Radio Fréquence (RF). Dans ce cas, la valve émettrice comprend des moyens permettant d'émettre une tramé Radio Fréquence et le récepteur de bord des moyens permettant de recevoir une trame RF. La valve peut par exemple comprendre, un transpondeur pouvant être excité par un outil ou un système de détection d'un événement particulier et une antenne RF permettant d'émettre une trame RF et le récepteur peut être muni d'une antenne RF permettant de recevoir la trame émise.

Selon une particularité avantageuse de l'invention, la plage de mémoire comporte une mémoire tampon, qui peut être rafraîchie facilement par de nouvelles données contenues dans une nouvelle trame RF reçue.

Selon un autre aspect de l'invention il est proposé un système de transmission d'au moins une donnée d'identification d'une valve d'au moins une roue à un récepteur de bord d'un véhicule, caractérisé en ce qu'il comprend:
- des moyens d'excitation de la valve,
- des moyens d'émission par la valve d'une trame de données comprenant au moins un code identifiant de la valve,
- des moyens de réception par le récepteur de la trame émise,
- une plage de mémoire, contenue dans le récepteur, et pouvant être rafraîchie avec les données contenues dans la trame reçue ;
- des moyens de lecture des données contenues dans la plage de mémoire ;
- des moyens d'écriture d'au moins une partie des données lues comportant un code identifiant, dans une zone mémoire dudit récepteur dédiée au stockage de codes identifiants,
- des moyens d'activation des moyens d'écriture sur validation d'un opérateur.

L'invention sera mieux comprise à l'aide de la description qui va suivre, donnée uniquement à titre d'exemple et faite en référence aux dessins annexés dans lesquels :
- la figure 1 représente schématiquement un mode de réalisation particulier d'un système pour la mise en oeuvre d'un procédé selon l'invention ;
- la figure 2 représente schématiquement une suite d'opérations réalisées lors de la mise en oeuvre d'un procédé selon l'invention ;

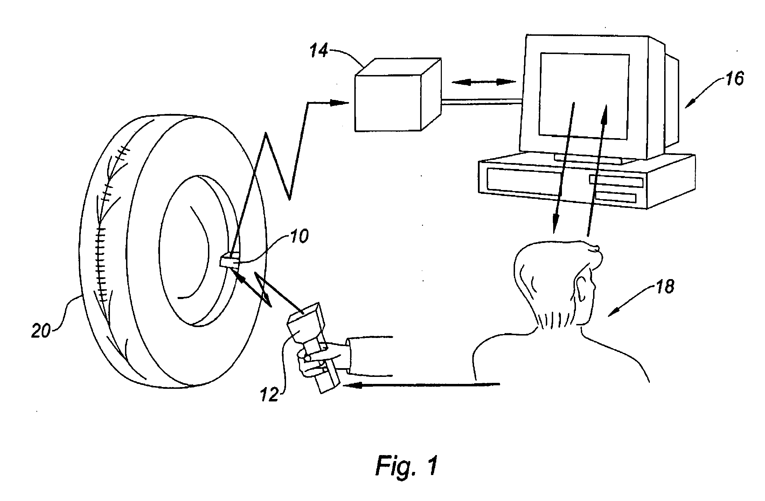

Sur la figure 1, il apparaît que le système représenté comprend une valve 10 montée sur une roue 20, un outil d'excitation 12, un récepteur de bord 14 et un outil de diagnostic 16, prenant par exemple la forme d'un micro-ordinateur.

Un tel outil de diagnostic 16 est disponible pour opérer différents contrôles sur un véhicule, en traiter les données à contrôler, en analyser les résultats et fournir à un opérateur 18 différentes hypothèses sur les pannes et dysfonctionnements du véhicule. Il est utilisé par exemple pour détecter les défauts d'injection, de sacs gonflables ou « air bag », pour configurer un calculateur de bord, lui apprendre les clefs de l'anti-démarrage, etc. Pour s'adapter aux différents véhicules et à différentes normes, il dispose d'une pluralité de fonctions de diagnostic et est facilement re-programmable.

S'il est préférable de reprogrammer un outil de diagnostic 16 existant, un outil de diagnostic 16 peut être spécialement développé pour la mise en oeuvre d'un procédé selon l'invention.

L'outil de diagnostic 16 peut être connecté, par exemple par un câble ou par une connexion sans fil, au récepteur de bord 14 soit directement soit via un outil intermédiaire qui peut par exemple être un calculateur de bord (non représenté).

L'outil d'excitation 12 peut émettre des excitations spécifiques. Ces excitations sont, de préférence, des excitations dans la bande des radiofréquences.

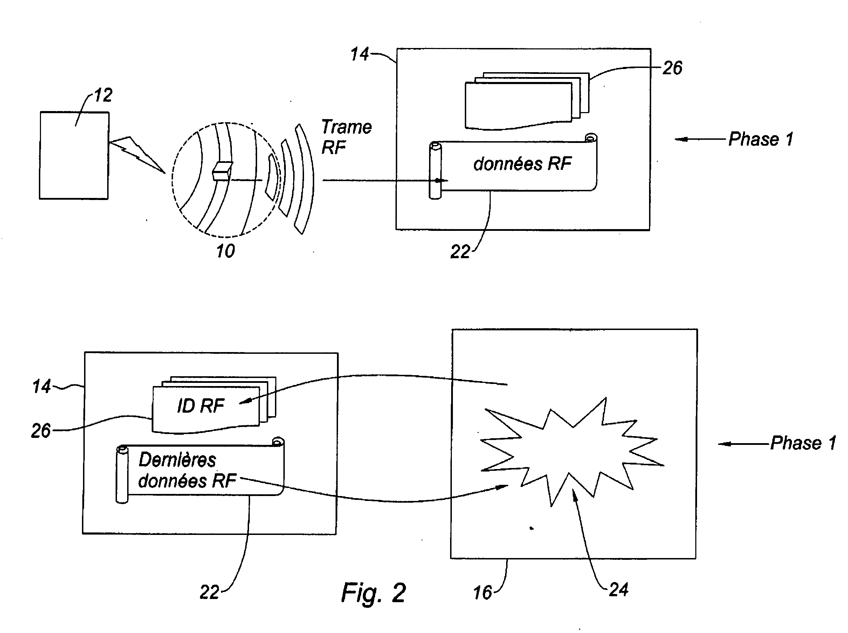

En référence à la figure 2, la transmission d'un code identifiant d'une valve comprend une première et une deuxième phases. Ces deux phases sont en partie ou complètement désynchronisées.

Au moins une roue 20 porte une valve émettrice 10. Lors de la première phase, excitée par une excitation spécifique émise par l'outil d'excitation 12 actionné par l'opérateur 18, la valve 10 émet en réponse à cette excitation une trame spécifique, de préférence Radio Fréquence (RF), que reçoit le récepteur de bord 14.

La valve 10, peut aussi être excitée par un autre événement précis. Cet événement peut être un écart de pression au niveau des pneumatiques de la roue 20, qui porte la valve 10. Cet écart de pression peut, par exemple, être une diminution de la pression des pneumatiques par une fuite d'air ou par une crevaison ou bien par un dégonflement effectué par une personne quelconque ou une augmentation de la pression des pneumatiques.

Dans tous les cas la trame émise contient au moins un code identifiant de la valve ayant émis la trame et de préférence des données concernant le type d'événement ayant déclenché l'émission de la trame. L'événement déclencheur peut par exemple être au moins l'un de ceux cités dans les deux paragraphes précédents.

Lors de la réception de la trame émise par la valve 10 par le récepteur de bord 14, que l'on peut aussi appeler un récepteur RF dans le cas ou la trame émise est une trame RF, il y a mémorisation de cette trame dans une plage de mémoire 22 du récepteur 14. Cette plage de mémoire 22 est de préférence une mémoire tampon. L'enregistrement de la trame dans la plage de mémoire 22 comprend un rafraîchissement de la plage de mémoire 22.

A chaque réception de nouvelles données suite à une excitation d'une ou plusieurs valves 10, les données anciennes de cette plage de mémoire 22 sont effacées en partie ou en totalité et sont remplacées par les nouvelles données reçues. Ainsi, la plage de mémoire 22 contient seulement les dernières données reçues par le récepteur de bord 14.

Le contenu de la plage de mémoire 22 est accessible à tout moment par un service de lecture de données utilisant un identifiant local (local ID) associé à la plage de mémoire 22, que l'on peut appeler un « diag on CAN ». Cette lecture peut se faire à l'aide de l'outil de diagnostic 16 discuté plus haut. Cet outil de diagnostic 16 peut aussi envoyer des consignes à l'outil d'excitation 12 de la valve 10, pour que l'outil d'excitation 12 provoque une excitation de la valve 10. L'envoi de telles consignes ou requêtes de lecture est avantageusement précédé d'une validation d'un utilisateur ou de l'opérateur 18.

L'outil de diagnostic 16 émet alors une requête de lecture de la plage de mémoire 22 du récepteur 14. La lecture des données peut se faire par l'intermédiaire d'un processeur des bus de données.

Au cours de la deuxième phase, une fois que les données de la plage de mémoire 22 sont lues, l'outil de diagnostic 16 peut effectuer un traitement des données lues par des moyens de traitement 24. Ce traitement peut comprendre une vérification de la cohérence de ces données. Le traitement peut aussi comprendre une extraction d'au moins un code identifiant de la valve 10. L'outil de diagnostic 16 peut traiter les données pour en extraire des informations relatives au type d'événement ayant provoqué l'émission de la trame qui a provoqué l'enregistrement des données lues dans la plage de mémoire 22.

Une fois les données traitées, et le code identifiant de la valve 10 extrait, l'outil de diagnostic 16 peut procéder à l'écriture du code identifiant dans une zone de mémoire 26 dédiée au stockage des codes identifiants,du récepteur de bord 14 après validation de l'opérateur (18). Cette zone de mémoire 26 est en fait une mémoire d'identifiants dans laquelle on peut trouver un ou plusieurs identifiants d'une ou plusieurs valves 10.

Les opérations qui viennent d'être décrites peuvent être réitérées autant de fois qu'il y a de valves 10 dont les codes identifiants doivent être transmis au récepteur de bord. De cette manière on peut procéder à la transmission du code identifiant de toutes les valves de toutes les roues d'un véhicule, sans qu'il y ait apprentissage de ces codes identifiants.

De plus, le fonctionnement d'un système de surveillance de la pression des pneus d'un véhicule, qui portent des valves dont le code identifiant à déjà été transmis au récepteur de bord, n'est nullement affecté par les opérations décrites ci-dessus.

## Revendications

1. Procédé de transmission d'au moins une donnée d'identification d'une valve (10) d'au moins une roue (20) à un récepteur de bord (14) d'un véhicule, ledit procédé comprenant :
d'une part, au moins une itération des étapes suivantes :
- excitation de la valve (10),
- émission, par la valve (10), d'une trame de données comprenant au moins un code identifiant de la valve (10), et
- réception de la trame par le récepteur de bord (14), la réception comprenant un rafraîchissement, par les données de la trame reçue, d'une plage de mémoire (22) contenue dans ledit récepteur (14) ;
d'autre part :
- une opération de lecture, par un outil de diagnostic (16), des dernières données contenues dans ladite plage de mémoire (22), et
- une opération d'écriture dans une zone mémoire (26) dédiée au stockage de codes identifiant, par un outil de diagnostic (16), d'au moins une partie desdites données lues comportant un code identifiant ;
l'opération d'écriture étant effectuée après validation d'un opérateur (18).

2. Procédé selon la revendication 1, **caractérisé en ce que** le contenu de la plage de mémoire (22) est accessible par l'opérateur sur requête à l'aide d'un service de lecture de données utilisant un identifiant local associé à la plage de mémoire (22).

3. Procédé selon l'une quelconque des revendications précédentes, **caractérisé en ce que** la trame de données émise par la valve (10) comprend en outre des données concernant un type d'événement ayant provoqué l'excitation de ladite valve (10).

4. Procédé selon l'une quelconque des revendications 1 ou 2, **caractérisé en ce que** l'excitation de la valve (10) est provoquée grâce à un outil émetteur (12).

5. Procédé selon l'une quelconque des revendications 1 ou 2, **caractérisé en ce que** l'excitation de la valve (10) est provoquée par un écart de pression au niveau d'un pneumatique d'une roue (20) portant la valve (10).

6. Procédé selon l'une quelconque des revendications précédentes, **caractérisé en ce qu'**il comprend en outre un traitement des données lues dans la plage de mémoire (22) par un outil de diagnostic (16).

7. Procédé selon la revendication 6, **caractérisé en ce que** le traitement des données lues comprend une vérification de la cohérence et/ou et de la pertinence des données conformément à un format prédéfini.

8. Procédé selon l'une quelconque des revendications précédentes, **caractérisé en ce que** la trame de données émise par la valve (10) est une trame Radio Fréquence.

9. Procédé selon la revendication 4, **caractérisé en ce que** la plage de mémoire (22) comporte une mémoire tampon.

10. Système de transmission d'au moins une donnée d'identification d'une valve (10) d'au moins une roue (20) à un récepteur de bord (14) d'un véhicule comprenant :
- des moyens d'excitation (12) de la valve (10),
- des moyens d'émission par la valve (10) d'une trame de données comprenant au moins un code identifiant de la valve (10),
- des moyens de réception par le récepteur (14) de la trame émise,
- une plage de mémoire (22), contenue dans le récepteur (14), et pouvant être rafraîchie avec les données contenues dans la trame reçue ;
- des moyens de lecture (16) des données contenues dans la plage de mémoire (22);
- des moyens d'écriture (16) d'au moins une partie des données lues comportant un code identifiant, dans une zone mémoire (26) dudit récepteur (14) dédiée au stockage de codes identifiants,
- des moyens d'activation des moyens d'écriture (16) sur validation d'un opérateur (18).

## Patentansprüche

1. Verfahren zum Übertragen mindestens einer Identifikationsinformation eines Ventils (10) mindestens eines Rades (20) zu einem Bordempfänger (14) eines Fahrzeugs, wobei das Verfahren Folgendes aufweist:
einerseits mindestens eine Wiederholung der folgenden Schritte:
- Erregung des Ventils (10),
- Senden durch das Ventil (10) eines Datenrahmens, der mindestens einen Identifikationscode des Ventils (10) enthält, und
- Empfang des Rahmens durch den Bordempfänger (14), wobei der Empfang ein Auffrischen eines Speicherbereichs (22), der in dem Empfänger (14) enthalten ist, mit den Daten des empfangenen Rahmens umfasst;
andererseits:
- einen Lesevorgang durch ein Diagnosetool (16) der letzten in dem Speicherbereich (22) enthaltenen Daten, und
- einen Schreibvorgang in einem Speicherbereich (26), der dem Speichern von Identifikationscodes vorbehalten ist, durch ein Diagnosetool (16) mindestens eines Teils der gelesenen Daten, die einen Identifikationscode enthalten;
wobei der Schreibvorgang nach dem Bestätigen durch einen Bediener (18) ausgeführt wird.

2. Verfahren nach Anspruch 1, **dadurch gekennzeichnet, dass** der Inhalt des Speicherbereichs (22) für den Bediener auf Anfrage mit Hilfe eines Datenleseservice, der einen lokalen Identifikator, der mit dem Speicherbereich (22) verbunden ist, verwendet, zugänglich ist.

3. Verfahren nach einem der vorhergehenden Ansprüche, **dadurch gekennzeichnet, dass** der Datenrahmen, der von dem Ventil (10) gesendet wird, ferner Daten enthält, die einen Ereignistyp betreffen, der das Erregen des Ventils (10) verursacht hat.

4. Verfahren nach einem der Ansprüche 1 oder 2, **dadurch gekennzeichnet, dass** die Erregung des Ventils (10) dank einem Sendetool (12) verursacht wird.

5. Verfahren nach einem der Ansprüche 1 oder 2, **dadurch gekennzeichnet, dass** die Erregung des Ventils (10) durch einen Druckunterschied auf dem Niveau eines Reifens eines Rades (20), das das Ventil (10) trägt, verursacht wird.

6. Verfahren nach einem der vorhergehenden Ansprüche, **dadurch gekennzeichnet, dass** es ferner eine Verarbeitung der Daten, die in dem Speicherbereich (22) von dem Diagnosetool (16) gelesen werden, aufweist.

7. Verfahren nach Anspruch 6, **dadurch gekennzeichnet, dass** die Verarbeitung der gelesenen Daten eine Prüfung der Kohärenz und/oder der Relevanz der Daten gemäß einem vorbestimmten Format umfasst.

8. Verfahren nach einem der vorhergehenden Ansprüche, **dadurch gekennzeichnet, dass** der von dem Ventil (10) gesendete Datenrahmen ein Hochfrequenzrahmen ist.

9. Verfahren nach Anspruch 4, **dadurch gekennzeichnet, dass** der Speicherbereich (22) einen Pufferspeicher aufweist.

10. System zum Übertragen mindestens einer Identifikationsinformation eines Ventils (10) mindestens eines Rades (20) zu einem Bordempfänger (14) eines Fahrzeugs, das Folgendes aufweist:
- Mittel (12) zum Erregen des Ventils (10),
- Mittel zum Senden durch das Ventil (10) eines Datenrahmens, der mindestens einen Identifikationscode des Ventils (10) enthält,
- Mittel zum Empfangen des gesendeten Rahmens durch den Empfänger (14),
- einen Speicherbereich (22), der in dem Empfänger (14) enthalten ist und der mit den Daten, die in dem empfangenen Rahmen enthalten sind, aufgefrischt werden kann;
- Mittel zum Lesen (16) der Daten, die in dem Speicherbereich (22) enthalten sind;
- Mittel zum Schreiben (16) mindestens eines Teils der gelesenen Daten, die einen Identifikationscode enthalten, in einen Speicherbereich (26) des Empfängers (14), der dem Speichern von Identifikationscodes vorbehalten ist,
- Mittel zum Aktivieren der Schreibmittel (16) bei Bestätigung durch einen Bediener (18).

## Claims

1. Method for transmitting at least one piece of data identifying a valve (10) of at least one wheel (20) to a receiver (14) on board a vehicle, said method comprising:
firstly, at least one iteration of the following steps:
- excitation of the valve (10);
- transmission by the valve (10) of a frame comprising at least a code identifying the valve (10); and
- reception of the frame by the on board receiver (14), the reception comprising a refreshing of a memory range (22) contained in said receiver (14) by the data from the frame received;
secondly:
- a reading operation, by a diagnostic instrument (16), of the most recent data contained in said memory range (22); and
- an operation of writing to an area of memory (26) dedicated to storing identifier codes, by a diagnostic instrument (16), of at least part of said data read including an identifier code;
the writing operation being carried out after validation by an operator (18).

2. Method according to Claim 1, **characterized in that** the content of the memory range (22) is accessible by the operator on request with the help of a data reading operation using a local identifier associated with the memory range (22).

3. Method according to either one of the preceding claims, **characterized in that** the frame transmitted by the valve (10) furthermore includes data concerning the type of event having caused the excitation of said valve (10).

4. Method according to either of Claims 1 or 2, **characterized in that** the excitation of the valve (10) is caused thanks to a transmitter instrument (12).

5. Method according to either of Claims 1 or 2, **characterized in that** the excitation of the valve (10) is caused by a pressure difference in a tire of a wheel (20) bearing the valve (10).

6. Method according to any of the preceding claims, **characterized in that** it comprises processing of the data read into the memory range (22) by a diagnostic instrument (16).

7. Method according to Claim 6, **characterized in that** the processing of the data read includes verification of the consistency and/or the relevance of the data according to a predefined format.

8. Method according to any of the preceding claims, **characterized in that** the frame transmitted by the valve (10) is a radio frequency frame.

9. Method according to Claim 4, **characterized in that** the memory range (22) includes a buffer.

10. System for transmitting at least one piece of data identifying a valve (10) of at least one wheel (20) to a receiver (14) on board a vehicle, comprising:
- means (12) for exciting the valve (10);
- means for the valve (10) to transmit a frame including at least a code identifying the valve (10);
- means for the receiver (14) to receive the transmitted frame;
- a memory range (22), contained in the receiver (14) and capable of being refreshed by the data contained in the frame received;
- means (16) of reading the data contained in the memory range (22);
- means (16) of writing at least a part of the data read including an identifier code to an area of memory (26) in said receiver (14) dedicated to storing identifier codes; and
- means of activating the writing means (16) on validation by an operator (18).
